# EUROPÄISCHE PATENTANMELDUNG

(11) **EP 0 967 777 A2**
(43) Veröffentlichungstag der Anmeldung: **29.12.1999**
(21) Anmeldenummer: 98111918.3
(22) Anmeldetag: 26.06.1998
(51) Int. Cl.: H04M 11/06, H04Q 11/04

(54) **Verfahren zur Übertragung von Informationen im Teilnehmeranschlussbereich**

(71) Anmelder: SIEMENS AKTIENGESELLSCHAFT, 80333 München (DE)
(72) Erfinder: Schröder, Stefan, 80802 München (DE)

(57) **Zusammenfassung**

Die gegenwärtig bekannten Übertragungsverfahren im Teilnehmeranschlußbereich wie beispielsweise xDSL lassen eine einmal vorgenommene Umkonfigurierung der xDSL Strecke nicht zu. Um hier eine größere Flexibilität zu erreichen, wird vorgesehen, die betreffende xDSL Strecke durch höhere Protokolle dynamisch umzukonfigurieren.

## Beschreibung

Die Erfindung betrifft ein Verfahren gemäß dem Oberbegriff von Patentanspruch 1.

Die Übertragung von Informationen zwischen Teilnehmer und der diesem jeweils zugeordneten Ortsvermittlungsstelle erfolgt über ein Teilnehmeranschlußleitungsnetz, das in der Regel eine Mehrzahl von Teilnehmeranschlußleitungen umfaßt. Diese bestehen beim Stand der Technik aus herkömmlichen Kupferadern (a/b Adern). Dabei werden die einzelnen Teilnehmeranschlußleitungen gebündelt und an die betreffende Ortsvermittlungsstelle herangeführt.

Über das Teilnehmeranschlußleitungsnetz wurden in der Vergangenheit ausschließlich Sprachinformationen übertragen, wobei in den letzten Jahren die Übertragung von Daten und Informationen anderer Art zunehmend an Bedeutung gewinnt. Während die Übertagung von Sprachinformationen mit einer relativ geringen Bandbreite durchgeführt werden kann,wird für die Übertragung von Daten sehr viel mehr Bandbreite benötigt. Hierzu wären jedoch eigene Netze zu installieren.

Für zukünftige Übertragungszwecke wird daher angestrebt, die bereits existierende Teilnehmeranschlußleitungsnetze auch für die Übertragung von Daten und Informationen höherbitratiger Dienste zu nutzen. Hierzu sind aber eigene Übertragungsverfahren zu entwickeln. Derartige Übertragungsverfahren sind beispielsweise die sogenannten xDSL (ADSL, HDSL etc.) Verfahren. Damit können die Kupferadern des Teilnehmeranschlußleitungsnetzes durch geeignete übertragungstechnische Maßnahmen bis zu Übertragungsraten im Mbit/s-Bereich hin ausgenutzt werden.

Das Übertragungsverfahren ADSL ist asymmetrisch ausgebildet. Dies bedeutet, daß eine höhere Bitrate in einer bevorzugten Richtung auf Kosten einer niedrigeren Bitrate in der Gegenrichtung gewählt werden kann. Beispielsweise können bis zu 6 Mbit/s vom Netz aus zum Teilnehmer hin gesendet werden und 2 Mbit/s vom Teilnehmer zum Netz hin. Der Nachteil einer derartigen Vorgehensweise ist darin zu sehen, daß die einmal gewählte Vorzugsrichtung nicht dynamisch geändert werden kann.

Der Erfindung liegt die Aufgabe zugrunde, einen Weg aufzuzeigen, wie eine bidirektionale Übertragung zwischen Netz und Teilnehmer flexibel gesteuert werden kann.

Vorteilhaft an der Erfindung ist insbesondere, daß eine Schnittstelle zwischen der Applikationsebene und der physikalischen Übertragung vorgesehen wird, der Steuerdaten durch Auswertung von Protokollen zugeführt werden. Damit ist der Vorteil verbunden, daß die durch Verwendung eines xDSL Verfahrens wie z. B. ADSL eingestellte Vorzugsrichtung durch höhere Protokolle umkonfigurierbar ist.

Vorteilhafte Weiterbildungen der Erfindung sind in den Unteransprüchen angegeben.

Die Erfindung wird im folgenden anhand eines Ausführungsbeispiels näher erläutert:

Demgemäß wird vorgesehen, eine Schnittstelle zwischen der Applikationsebene und der physikalischen Übertragung vorzusehen. Die Schnittstelle soll vorzugsweise in der Ortsvermittlungsstelle angeordnet werden. Über diese Schnittstelle werden Steuerdaten bereitgestellt, mittels denen die Vorzugsrichtung des Übertragungsverfahrens ADSL umkonfiguriert werden kann. Die Umkonfigurierung wird dabei durch höhere Protokolle angestoßen.

Als höhere Protokolle kommen beispielsweise die Signalisierung, die Auswertung von Resource-Management-Zellen in ATM-Netzen oder IP'Flow Detection' Mechanismen in Frage. Sollte die Auswertung einer höheren Protokollschicht den Bedarf einer Änderung der benötigten Bitrate in einer bestimmten Richtung ergeben, so wird die xDSL Strecke entsprechend umkonfiguriert. Die Physik, das heißt die Kupferadern, werden somit immer dem Bedarf entsprechend optimal angepaßt und ausgenutzt. Je nach Art der gewünschten Nutzanwendung wird somit einmal die Netz-zum-Teilnehmer-Richtung oder die Teilnehmer-zu-Netz-Richtung die höhere Übertragungsrate besitzen. Dabei sind symmetrisch aufgeteilte Bitraten auch möglich.

Im Falle der Signalisierung wird bei ATM basierten Netzen vorgesehen, mittels der Signalisierung eine bestimmte Übertragungsrate vom Netzanzufordern. Diese Signalisierungsprotokolle erlauben die Benutzung von unsymmetrischen Verbindungen. Wird nun beispielsweise der Fall eines 'Filedownload' von einem Server betrachtet, so wird eine höhere Übertragungskapazität vom Netz zum Teilnehmer hin benötigt. Wird hingegen beispielsweise eine 'Videotelephony' gewünscht, so wird insbesondere die gleiche, möglichst hohe Übertragungskapazität für beide Richtungen nötig sein. Die Auswertung der Signalisierungsprotokolle paßt in diesem Beispiel die physikalische Übertragungsrate automtisch an.

Im Falle der Übertragung von Informationen mittels ABR-Verkehr wird vorgesehen, die RM-Zellen beispielswesie in der Ortsvermittungsstelle auszuwerten. In den RM-Zellen sind Informationen über die Auslastung des Netzes enthalten (Congestion Indication Signale). Mit diesen Informationen wird eine Einstellung der Bandbreite über die Schnittstelle zwischen der Applikationsebene und der physikalischen Übertragung vorgenommen.

Im Falle der Übertragung von Informationen über das Internet können Umkonfigurierungen über IP' Flow Detection' Mechanismen vorgenommen werden. Ebenso ist es möglich, die Bandbreite in Abhängigkeit vom verwendeten Protokoll der Anwendungsschicht einzustellen.

Das hier beschriebene Verfahren kann mit den bekannten Adaptionsverfahren (das heißt automatische Identifizierung der maximal möglichen Übertragungsrate über vorhandene Adern) kombiniert werden. Weiterhin läßt sich der hier vorgestellte Grundggedanke auch auf andere Bereiche ausdehnen, zum Beispiel auf nicht leitungsgebundene Übertragungsverfahren.

## Patentansprüche

1. Verfahren zur Übertragung von Informationen im Teilnehmeranschlußbereich, mit einem Teilnehmeranschlußleitungsnetz, über das Informationen nach einem xDSL-Verfahren übertragen werden,
**dadurch gekennzeichnet**,
daß eine Schnittstelle zwischen der Applikationsebene und der physikalischen Übertragung vorgesehen wird, der Steuerdaten durch Auswertung von Protokollen zugeführt werden, mittels denen eine xDSL Strecke umkonfigurierbar ist.

2. Verfahren nach Anspruch 1,
**dadurch gekennzeichnet**,
daß die Schnittstelle in der Ortsvermittlungsstelle angeordnet ist.

3. Verfahren nach Anspruch 1, 2,
**dadurch gekennzeichnet**,
daß die Steuerdaten der Signalisierung entnommen werden.

4. Verfahren nach Anspruch 1, 2,
**dadurch gekennzeichnet**,
daß die Steuerdaten den RM-Zellen des ABR-Verkehrs entnommen werden.

5. Verfahren nach Anspruch 1, 2,
**dadurch gekennzeichnet**,
daß die Steuerdaten dem Internet Protokoll entnommen werden.
